# EUROPÄISCHE PATENTSCHRIFT

(11) **EP 0 706 028 B1**
(45) Veröffentlichungstag und Bekanntmachung des Hinweises auf die Patenterteilung: **17.11.1999**
(21) Anmeldenummer: 95115261.0
(22) Anmeldetag: 26.09.1995
(51) Int. Cl.: G01C 9/20, H01H 29/04, G01C 25/00

(54) **Neigungssensor und Verfahren zu dessen Herstellung**
Inclination sensor and method for its manufacture
Capteur d'inclinaison et procédé pour sa fabrication

(30) Priorität: 04.10.1994 DE 4435521
(43) Veröffentlichungstag der Anmeldung: 10.04.1996
(73) Patentinhaber: TEMIC TELEFUNKEN microelectronic GmbH, 74072 Heilbronn (DE)
(72) Erfinder: Strauss, Hans-Jürgen, D-89134 Blaustein (DE); Lenz, Horst, D-89269 Illerzell (DE)

(56) Entgegenhaltungen:
- EP-A- 0 358 788
- WO-A-93/26025
- DE-C- 706 895

## Beschreibung

Die vorliegende Erfindung betrifft einen Neigungssensor nach dem Oberbegriff des Patentanspruches 1 sowie ein Verfahren zur Herstellung eines solchen Neigungssensors.

Neigungssensoren sind z.B. bekannt aus der DE- 3 406 174, der EP-Schrift 0 358 788 oder der US-PS 4 244 117. Sie bestehen im allgemeinen aus einem nicht leitenden Gefäß mit mehreren Elektroden in dem sich eine elektrolytische Flüssigkeit befindet. Je nach Neigungslage des Gefäßes ergeben sich zwischen den Elektroden unterschiedliche Widerstandswerte, die als Maß für die entsprechende Neigungslage dienen. Eine Anwendungsart ist die als Sensor einer Diebstahlsperre z.B. für Kraftfahrzeuge.

Aus der Patentschrift DE-C-706 895 ist ein elektrischer Schalter mit leitender Schaltflüssigkeit und Metallgehäuse bekannt, wobei die elektrisch leitende Flüssigkeit eine drahtförmige und in das Metallgehäuse isoliert eingeschmolzene, platinierte Elektrode bedeckt. Ein Schaltvorgang wird ausgelöst, sobald durch Neigen oder Kippen des Schaiters zwischen Elektrode und Gehäuse eine leitende Verbindung hergestellt ist. Damit läßt sich dieser Schalter auch als Neigungssensor (Neigungsschalter) verwenden.

Solche Sensoren müssen einerseits sehr zuverlässig und langlebig sein, anderseits sollen sie billig und einfach und robust im Aufbau sein. Der vorliegenden Erfindung liegt daher die Aufgabe zugrunde, einen Sensor der eingangs genannten Art anzugeben, der bei hoher Betriebsbeständigkeit einfach mit für die Massenfertigung geeigneten Mitteln herstellbar ist.

Diese Aufgabe wird durch die im Kennzeichen des Patentanspruches 1 angegebenen Merkmale gelöst.

Die Verwendung eines Platinmanteldrahtes erleichtert die Herstellung einer vakuumdichten, dauerhaften und robusten Einschmelzung der Durchführungsstifte in einem Preßglasfuß. Ferner ist eine hohe Korrosionsbeständigkeit gegenüber der Elektrolytflüssigkeit gegeben, sodaß sich auch bei langer Betriebszeit keine störenden Änderungen in den Übergangswiderständen zwischen den Durchführungsstiften und der Elektrolytflüssigkeit ergeben.

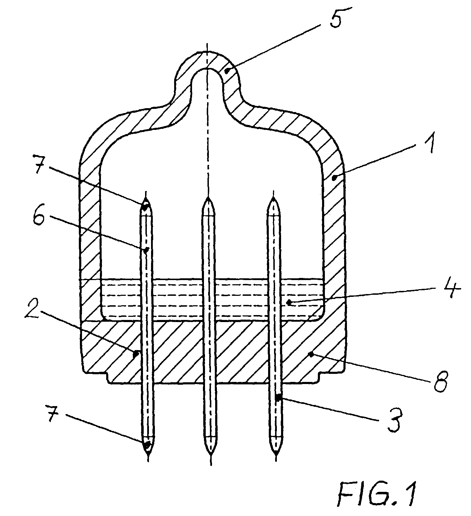

Die Erfindung wird nachfolgend anhand des in den Figuren 1-3 dargestellten bevorzugten Ausführungsbeispiels näher erläutert.

Die Figur 1 zeigt im Querschnitt einen erfindungsgemäßen Neigungssensor, dessen Glasgehäuse aus dem Preßglasfuß 2 und dem Glasdom 1 besteht, die im Bereich 8 vakuumdicht miteinander verschmolzen sind. In den Preßglasfuß 2 sind fünf Durchführungsstifte vakuumdicht eingepreßt bzw. eingeschmolzen, deren äußere Teile 3 Anschlußkontakte darstellen. Die inneren Teile 6 der Stifte sind Kontaktstifte zur Kontaktierung der im Inneren des Gehäuses eingeschlossenen Elektrolytflüssigkeit 4. Die Durchführungsstifte bestehen aus Abschnitten eines Platinmanteldrahtes, wobei das Kernmaterial innerhalb des Platinmantels bevorzugt aus einer Ni-Fe-Legierung besteht. Zweckmäßig sind 4 Stifte in gleichmäßigen Abständen um einen zentralen Stift herum angeordnet.

Gemäß vorliegender Erfindung sind die Enden 7 der Durchführungsstifte durch Heißreißen hergestellt. Unter Heißreißen versteht man ein Trennverfahren, bei dem Stangen oder Drähte punktuell mit scharfer Flamme erhitzt und auseinandergerissen werden. Es bilden sich dabei kuppenförmige bis spitze Enden. Beim Erfindungsgegenstand ist diese Trennart besonders günstig, weil sich das Mantelmaterial weitgehend über die Kuppe zieht und somit auch die Enden weitgehend mit dem Platinmantel überzogen sind, sodaß eine störende Korrosion des Kernmaterials der Kontaktstifte durch die Elektrolytflüssigkeit weitgehend vermieden wird. Ebenso ist kaum zu befürchten, das die Elektrolytflüssigkeit durch das Kernmaterial in ihren elektrischen Werten störend beeinflußt wird.

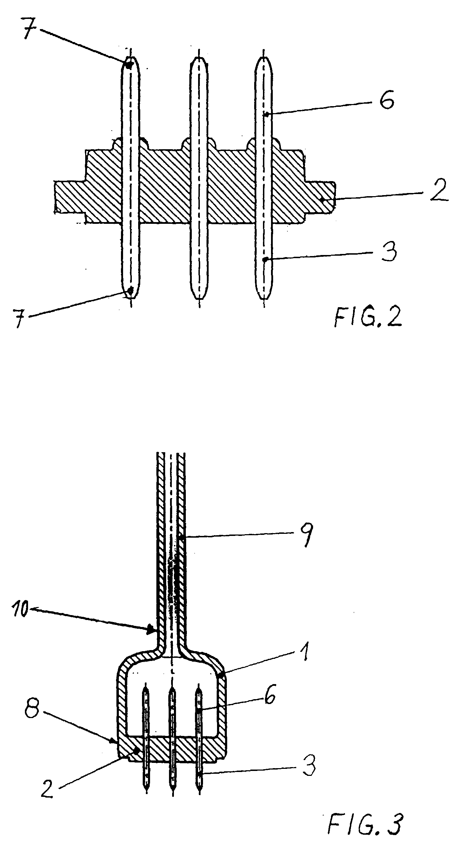

In Figur 2 ist im Querschnitt der Preßglasfuß 2 mit den vakuumdicht eingepreßten bzw. eingeschmolzenen Durchführungsstiften 3, 6 gezeigt. Die aus einem Platinmanteldraht hergestellten Durchführungsstifte besitzen an beiden Enden durch Heißreißen hergestellte Spitzkuppen 7. Von den fünf Stiften 3, 6 sind im gezeigten Querschnitt drei sichtbar. Mit 6 sind die inneren Teile der Durchführungsstifte bezeichnet.

Zur Herstellung des Sensors wird über den Glasfuß ein domförmiges Gehäuseteil 1 aus Glas gestülpt und mit dem Glasfuß 2 in einem ringförmigen Bereich 8 am Umfang des Glasfußes 2 vakuumdicht verschmolzen, wie dies in Figur 3 dargestellt ist. Das Gehäuseteil 1 weist zunächst einen Pumpstutzen 9 auf.

Nachdem das Gehäuseteil 1 an seinem offenen Umfang auf den Glasfuß 2 aufgesetzt und mit diesem vakuumdicht in einer Ringzone 8 verschmolzen wurde, wird zunächst durch den noch offenen Pumpstutzen 9 die Elektrolytflüssigkeit in genau dosierter Menge eingefüllt, z.B. mittels einer Düsennadel. Danach wird an einer mit 10 bezeichneten Stelle der Pumpstutzen 9 abgeschmolzen, sodaß sich die Abschmelzstelle 5 des fertigen Sensors gemäß Figur 1 ergibt.

Gegebenenfalls kann es zweckmäßig sein, die Luft innerhalb des Sensors ganz oder teilweise durch ein Schutzgas wie z.B. Stickstoff zu ersetzen. Das Einfüllen eines Schutzgases erfolgt vor dem Abschmelzen des Pumpstutzens 9 und kann vor, nach oder während des Einbringens der Elektrolytflüssigkeit erfolgen.

## Patentansprüche

1. Neigungssensor mit einem scheibenförmigen Glasfuß (2), der mehrere vakuumdicht eingesetzte metallische, jeweils aus einem inneren Teil (6) und einem äußeren Teil (3) bestehende Durchführungsstifte aufweist, mit einem vakuumdicht mit dem Glasfuß (2) verbundenen Glasdom (1) und mit einer in dem aus Glasfuß (2) und Glasdom (1) bestehenden Glasgehäuse eingeschlossenen Elektrolytflüssigkeit (4), wobei die Durchführungsstifte (3, 6) aus Abschnitten eines Platinmanteldrahtes bestehen, **dadurch gekennzeichnet**, daß zumindest die Enden (7) der inneren Teile (6) der Durchführungsstifte (3, 6) durch Heißreißen aus einem Platinmanteldraht hergestellt sind.

2. Neigungssensor nach Anspruch 1, **dadurch gekennzeichnet**, daß auch die Kuppen der Enden (7) der inneren Teile (6) der Durchführungsstifte (3, 6) weitgehend mit dem Platinmantel bedeckt sind.

3. Neigungssensor nach Anspruch 1, **dadurch gekennzeichnet**, daß auch die Enden (7) der äußeren Teile (3) der Durchführungsstifte (3, 6) durch Heißreißen hergestellt sind.

4. Neigungssensor nach einem der Ansprüche 1 bis 3, **dadurch gekennzeichnet**, daß der Kern der Platinmanteldrahtabschnitte aus einer Nickel-Eisen-Legierung besteht.

5. Neigungssensor nach Anspruch 1, **dadurch gekennzeichnet**, daß der Glasdom (1) mit dem Glasfuß (2) vakuumdicht verschmolzen ist.

6. Neigungssensor nach Anspruch 1 oder 5, dadurch gekennzeichnet, daß der Glasfuß (2) ein Preßglasfuß ist.

7. Neigungssensor nach Anspruch 1, **dadurch gekennzeichnet**, daß das Glasgehäuse ein Schutzgas enthält.

8. Neigungssensor nach 1, **dadurch gekennzeichnet**, daß das Glasgehäuse Luft enthält.

9. Verfahren zur Herstellung eines Neigungssensors nach einem der Ansprüche 1 bis 8, **dadurch gekennzeichnet**, daß die Durchführungsstifte (3, 6) durch Heißreißen eines Platinmanteldrahtes hergestellt werden, daß ein Preßglasfuß (2) mit den vakuumdicht eingepreßten Durchführungsstiften (3, 6) hergestellt wird, daß der Preßglasfuß (2) an seinem Umfang mit dem, einen Pumpstutzen (9) aufweisenden Glasdom (1) am Umfang verschmolzen wird, daß durch den Pumpstutzen (9) die Elektrolytflüssigkeit (4) eingefüllt wird, und daß der Pumpstutzen (9) vakuumdicht abgeschmolzen wird.

## Claims

1. Inclination sensor including a disk-shaped glass base (2) incorporating a plurality of vacuum-tight, sealed-in metallic feed-through pins each having an inner part (6) and an outer part (3), a glass dome (1) connected in vacuum-tight manner to the glass base (2), and an electrolytic fluid (4) contained in the glass housing formed by the glass base (2) and the glass dome (1), wherein the feed-through pins (3, 6) consist of sections of a platinum coated wire, characterised in that at least the ends (7) of the inner parts (6) of the feed-through pins (3, 6) are made from a platinum coated wire using a hot rupturing process.

2. Inclination sensor in accordance with claim 1, characterised in that the domed faces at the ends (7) of the inner parts (6) of the feed-through pins (3, 5) are also substantially covered by the platinum coating.

3. Inclination sensor in accordance with Claim 1, characterised in that the ends (7) of the outer parts (3) of the feed-through pins (3, 6) are also made using a not rupturing process.

4. Inclination sensor in accordance with any of the Claims 1 to 3, characterised in that the core of the platinum coated wire sections consists of a nickel-iron alloy.

5. Inclination sensor in accordance with Claim 1, characterised in that the glass dome (1) is fused to the glass base (2) in vacuum-tight manner.

6. Inclination sensor in accordance with Claim 1 or 5, characterised in that the glass base (2) is a moulded glass base.

7. Inclination sensor in accordance with Claim 1, characterised in that the glass housing contains an inert gas.

8. Inclination sensor in accordance with 1 [sic], characterised in that the glass housing contains air.

9. Method of manufacturing an inclination sensor in accordance with any of the Claims 1 to 8, characterised in that the feed-through pins (3, 5) are produced by a process involving hot rupturing of a platinum coated wire, that a moulded glass base (2) incorporating the sealed-in, vacuum-tight feed-through pins (3, 5) is produced, that the moulded glass base (2) is fused at its periphery to the periphery of the glass dome (1) which comprises a pump connecting piece (9), that the electrolytic fluid (4) is inserted via the pump connecting piece (9) and that the pump connecting piece (9) is melted off to provide a vacuum-tight seal.

## Revendications

1. Détecteur d'inclinaison comportant une base en verre en forme de disque (2), qui possède plusieurs tiges traversantes métalliques, insérées d'une manière étanche au vide et constituées chacune par une partie intérieure (6) et une partie extérieure (3), un dôme en verre (1) relié d'une manière étanche au vide à la base en verre (2), et un électrolyte liquide (4) inséré dans un récipient en verre formé de la base en verre (2) et du dôme en verre (1), les tiges traversantes (3, 6) étant formées par des morceaux d'un fil à enveloppe de platine, caractérisé en ce qu'au moins les extrémités (7) des parties intérieures (6) des tiges traversantes (3, 6) sont fabriquées par arrachement à chaud à partir d'un fil à enveloppe de platine.

2. Détecteur d'inclinaison selon la revendication 1, caractérisé en ce que les pointes des extrémités (7) des parties intérieures (6) des tiges traversantes (3, 6) sont également recouvertes dans une large mesure par une enveloppe en platine.

3. Détecteur d'inclinaison selon la revendication 1, caractérisé en ce que les extrémités (7) des parties extérieures (3) des tiges traversantes (3, 6) sont également fabriquées par arrachement à chaud.

4. Détecteur d'inclinaison selon l'une des revendications 1 à 3, caractérisé en ce que le noyau des morceaux de fil à enveloppe de platine est formé d'un alliage nickel-fer.

5. Détecteur d'inclinaison selon la revendication 1, caractérisé en ce que le dôme en verre (1) est réuni par fusion, d'une manière étanche au vide, à la base en verre (2).

6. Détecteur d'inclinaison selon la revendication 1 ou 5, caractérisé en ce que la base en verre (2) est une base en verre pressé.

7. Détecteur d'inclinaison selon la revendication 1, caractérisé en ce que le boîtier en verre contient un gaz protecteur.

8. Détecteur d'inclinaison selon la revendication 1, caractérisé en ce que le boîtier en verre contient de l'air.

9. Procédé pour fabriquer un détecteur d'inclinaison selon l'une des revendications 1 à 8, caractérisé en ce qu'on fabrique les tiges traversantes (3, 6) par extraction à chaud d'un fil pourvu d'une enveloppe de platine, qu'on fabrique une base en verre pressé (2) avec les tiges traversantes (3, 6) insérées à force d'une manière étanche au vide, qu'on réunit par fusion la périphérie de la base en verre pressé (2) à la périphérie d'un dôme en verre (1) possédant une tubulure de pompage (9), qu'on introduit l'électrolyte liquide (4) au moyen de la tubulure de pompage (9) et qu'on ferme par fusion, d'une manière étanche au vide, la tubulure de pompage (9).
